# EUROPÄISCHE PATENTSCHRIFT

(11) **EP 1 105 848 B1**
(45) Veröffentlichungstag und Bekanntmachung des Hinweises auf die Patenterteilung: **24.09.2003**
(21) Anmeldenummer: 99953524.8
(22) Anmeldetag: 06.08.1999
(51) Int. Cl.: G07B 15/00

(54) **ABBUCHUNGSGERÄT ZUR ABRECHNUNG VON NUTZUNGSGEBÜHREN**
DEBITING DEVICE FOR DEDUCTING TOLLS
APPAREIL DE DECOMPTE POUR DEBITER DES TAXES D'UTILISATION

(30) Priorität: 12.08.1998 DE 19837488
(43) Veröffentlichungstag der Anmeldung: 13.06.2001
(73) Patentinhaber: Vodafone Holding GmbH, 40213 Düsseldorf (DE)
(72) Erfinder: BARKER, Ronald, D-81379 München (DE); WEBER, Günther, D-81243 München (DE); GRÜN, Bernd, D-82166 Gräfelfing (DE); WIDL, Andreas, D-81667 München (DE)
(74) Vertreter: Meissner, Peter E., Dipl.-Ing.
(86) Internationale Anmeldenummer: DE9902502
(87) Internationale Veröffentlichungsnummer: WO00010133

(56) Entgegenhaltungen:
- DE-A- 4 304 838
- DE-A- 4 339 004
- DE-A- 4 344 433
- DE-A- 4 402 613
- DE-A- 4 427 392
- US-A- 5 524 044
- US-A- 5 659 594

## Beschreibung

Die Erfindung betrifft ein Abbuchungsgerät, das in einem Fahrzeug angeordnet ist, zur Abrechnung von Nutzungsgebühren, die für die Nutzung von gebührenpflichtigen Wegstrecken eines Wegstreckennetzes zu entrichten sind.

Aus der EP 0 691 013 B1 ist ein Nutzungsabrechnungssystem bekannt, bei dem die Abrechnung der für die Straßenbenutzung eines Fahrzeugs fälligen Nutzungsgebühren in anonymisierter Weise im Fahrzeug selbst vorgenommen wird. Hierzu wird im Fahrzeug ein Abbuchungsgerät eingesetzt, das die Gebühren auf einem Speichermodul, das wie etwa bei einer Telefonkarte ein Guthaben enthält, abbucht. Das Speichermodul ist beispielsweise als Chip-Karte ausgebildet und kann hinsichtlich seines Guthabens in einem entsprechenden Automaten gegen Zahlung eines Geldbetrags bei Bedarf aufgeladen werden. Zur Ermittlung der entsprechend der Straßennutzung durch das Fahrzeug jeweils abzubuchenden Beträge verfügt das Abbuchungsgerät einerseits über Tarifdaten und andererseits über geografische Daten des gebührenpflichtigen Wegstreckennetzes. Darüber hinaus ist das Gerät mit einem Empfänger (GPS-Empfänger) zum Empfang von Signalen eines Navigationssatellitensystems ausgestattet, die es in die Lage versetzt, die jeweils zurückgelegten Strecken des Fahrzeugs auf den gebührenpflichtigen Straßen und somit auch die fälligen Nutzungsgebühren exakt zu ermitteln.

Voraussetzung für die Akzeptanz eines solchen Nutzungsabrechnungssystems ist die Gewährleistung eines Höchstmaßes an Manipulationssicherheit. Hierzu wurde in der EP 0 701 722 B1 ein Abbuchungsgerät vorgeschlagen, das neben einem GPS-Empfänger, einer Recheneinrichtung zur Identifizierung der vom Fahrzeug jeweils benutzten gebührenpflichtigen Wegstrecken sowie Speichermitteln zur Verbuchung der Nutzungsgebühren (Chip-Karte) eine Einrichtung zur Selbstüberwachung auf unautorisierte Manipulationen an den einzelnen Gerätekomponenten aufweist. Das Gerät verfügt weiterhin über einen Fehlerspeicher zur Aufzeichnung diagnostizierender Daten im Falle einer unautorisierten Manipulation sowie über eine Signaleinrichtung zur Aussendung eines Signals zur Erkennung der Ordnungsgemäßheit des Betriebszustands des Geräts. Sobald die Selbstüberwachung des Geräts eine unautorisierte Manipulation feststellt, wird automatisch eine sofortige Sperre bezüglich der sonstigen Gerätefunktionen ausgelöst, so daß das Gerät von diesem Zeitpunkt an unbrauchbar wird.

Trotz dieser Sicherungsmöglichkeiten besteht weiterhin ein Bedarf nach zusätzlichen oder alternativen, insbesondere kostengünstigeren Sicherungsmöglichkeiten gegen einen nicht ordnungsgemäßen Betrieb eines solchen Abbuchungsgerätes. Darüber hinaus besteht insbesondere auch auf seiten der Nutzer des gebührenpflichtigen Wegstreckennetzes ein Schutzbedürfnis gegen eine mißbräuchliche Nutzung des von ihnen käuflich erworbenen Guthabens für die Wegstreckennutzung. Eine einfache Speicherkarte könnte durch Verlust oder Diebstahl relativ einfach in unberechtigte Hände gelangen und zum Schaden des rechtmäßigen Eigentümers ausgenutzt werden.

Aus der Veröffentlichung "Gebühren erfassen aus luftiger Höhe" (Design & Elektronik, 11/1996) sind lediglich die generellen Funktionen eines Mautgeräts auf GPS-Basis entnehmbar. Es findet sich kein Hinweis auf eine mobile Auführung eines Mautgeräts. Im Hinblick auf einen Manipulationsschutz ist lediglich von einem Erkennen einer falschen Fahrzeugklasse die Rede.

Die DE 4427392 A1 offenbart ein in einem Fahrzeug installiertes Mautgerät, das mit einer herausnehmbaren Lese- und Schreibeinrichtung für Smart Cards ausgestattet ist. Es finden sich keinerlei Hinweise darauf, daß zwischen der herausnehmbaren Geräteeinheit und dem im Fahrzeug verbleibenden Geräteteil eine gegenseitige Authentisierung auf der Basis eines fahrzeugspezifischen Zertifikats und eines Zertifikats der mobilen Einheit stattfindet oder vorteilhaft sein könnte. Soweit von einer Diagnostizierung unautorisierter Benutzungen die Rede ist, bezieht sich diese auf die Nutzung gebührenpflichtiger Strecken, also auf das Befahren solcher Strecken ohne ein ausreichendes Wertguthaben für die Benutzungsgebühr, nicht aber auf eine unberechtigte Benutzung des Mautgeräts selbst. Die Angabe einer PIN wird lediglich in Zusammenhang mit der Aufladung der Wertguthabenkarte per Funk erwähnt.

Die CH 687 352 A5 beschreibt ein Mautgerät mit GPS-Funktion, bei dem eine als Datenschalteinheit bezeichnete Geräteinheit mobil ausgebildet ist, also aus dem Fahrzeug entfernbar ist. In einer Ausführungsform dieses Mautgeräts ist vorgesehen, daß ein Identitätscode der Datenschalteinheit mit der Identität des Fahrzeugs verglichen wird, so daß die Zugehörigkeit der Datenschalteinheit zu einem oder mehreren Fahrzeugen elektronisch überwacht werden kann, um insbesondere sicherzustellen daß der Einsatz des Datenerfassungsgerätes stets im richtigen Fahrzeugtyp erfolgt. Es finden sich in dieser Schrift keine Hinweise auf die Verwendung eines von außen mit einem Wertguthaben aufladbaren Speichers für die Abrechnung der Nutzungsgebühren.

Die US 5 465 207 befaßt sich mit einem Fahrzeugdatensystem, bei dem es um eine Einrichtung zur Erfassung von Daten in Zusammenhang mit der Nutzung und dem Betrieb von Transportfahrzeugen geht, wobei diese mit unterschiedlichsten Einrichtungen für einen elektronischen Datenaustausch ausgestattet sind. Es finden sich keinerlei Hinweise auf eine Gebührenermittlung für die Benutzung von Wegstrecken eines gebührenpflichtigen Wegstreckennetzes.

Aufgabe der vorliegenden Erfindung ist es, ein Abbuchungsgerät vorzuschlagen, das sowohl für den Betreiber als auch für den Nutzer des Nutzungsgebührenabrechnungssystems ein möglichst hohes Maß an Mißbrauchssicherung gewährleistet. Dies ist im Vergleich zur Mißbrauchsmöglichkeit bei einer Telefonkarte von wesentlich größerer Bedeutung, da im Regelfall die Beträge des von einem Nutzer erworbenen Wertguthabens erheblich höher liegen als bei einer Telefonkarte.

Gelöst wird diese Aufgabe erfindungsgemäß durch ein Abbuchungsgerät mit den Merkmalen des Patentanspruchs 1. Vorteilhafte Weiterbildungen der Erfindung sind in den abhängigen Ansprüchen wiedergegeben.

Ein wichtiger Grundgedanke der vorliegenden Erfindung ist darin zu sehen, daß ein wesentlicher Teil des Abbuchungsgeräts als separate Baueinheit in einem mobilen elektronischen Mautgerät besteht, das zur Herstellung der vollen Gerätefunktion erst mit Modulen verbunden werden muß, die fest im Fahrzeug eingebaut sind. Es sind dies eine Fahrzeugbox, ein Außenkommunikationsmodul und ein Halterungsmodul für die Aufnahme des mobilen Mautgeräts. Dabei ist vorgesehen, daß die Fahrzeugbox und das mobile Mautgerät jeweils über ein eigenes Gerätezertifikat verfügen und sich gegenseitig authentisieren. Auf diese Weise wird verhindert, daß z.B. ein gestohlenes mobiles Mautgerät in ein beliebiges anderes Fahrzeug mit einer (nicht passenden) Fahrzeugbox eingesetzt werden kann, um das im Wertspeicher des mobilen Mautgeräts vorhandene Wertguthaben unberechtigt nutzen zu können. Zum anderen ermöglichen die gerätetechnischen Vorkehrungen bezüglich der Außenkommunikation, daß eine Aufladung des Wertguthabenspeichers erfolgen kann, ohne den Speicher selbst aus dem Gerät herausnehmen zu müssen. Vielmehr kann die gesamte mobile Einheit des Mautgerätes mit einem entsprechenden Automaten zur Aufladung des Wertguthabens in Datenübertragungskontakt gebracht werden, indem dieses beispielsweise lediglich in dessen Nähe gebracht wird und der erforderliche Datenaustausch z.B. per DSRC-Kommunikation (dedicated short range communication) erfolgt. Der Speicher mit dem Wertguthaben kann daher integraler Bestandteil des mobilen Mautgerätes sein und wäre für einen unberechtigten Nutzer ohne die zum Mautgerät passende Fahrzeugbox mangels Authentisierungsmöglichkeit unbrauchbar.

Die gegenseitige Authentisierung von mobilem Mautgerät und Fahrzeugbox, ohne die das Abbuchungsgerät nicht funktionsfähig ist, ist ein ganz besonders wesentliches Merkmal der vorliegenden Erfindung, da erst hierdurch ein kaum überwindbarer Mißbrauchsschutz gewährleistet werden kann. Der damit verbundene Schutz ist erheblich besser als bei einer einfachen Identifikation der Gerätemodule. Letzterer ermöglicht nur einen bedingten Schutz, da dabei das eine Gerätemodul lediglich jeweils eine von dem zu überprüfenden anderen Gerätemodul erhaltene Gerätekennung mit einer einzelnen oder einer Liste von zulässigen Gerätekennungen vergleicht, also nur jeweils auf gerätemodulintern bekannte Speicherinformationen zurückgreift. Solche Informationen sind aber grundsätzlich manipulierbar.

Demgegenüber ist eine gegenseitige Authentisierung von Gerätemodulen, die jeweils ein eigenes Gerätezertifikat besitzen, deutlich sicherer. Dies wird dadurch ermöglicht, daß die dabei vorgenommene Überprüfung jeweils darauf gerichtet ist, festzustellen, ob das jeweils andere Gerätemodul im Besitz eines Geheimnisses ist, dessen Inhalt bei dem Datenaustausch zwischen den Gerätemodulen selbst nicht mit übermittelt wird und inhaltlich auch nicht im überprüfenden Gerätemodul gespeichert ist. Daher ist dieses Geheimnis, das durch Einschaltung einer vom Gerätebenutzer nicht beeinflußbaren Instanz (z.B. Trust-Center) erzeugt wird, von einem unberechtigten Benutzer nicht rekonstruierbar und somit nicht manipulierbar.

Die Erfindung wird nachfolgend anhand der beiden Figuren näher erläutert. Es zeigen:
- Fig. 1: ein Funktionsschema des erfindungsgemäßen Abbuchungsgerätes und
- Fig. 2: ein Funktionsschema eines mobilen Mautgeräts.

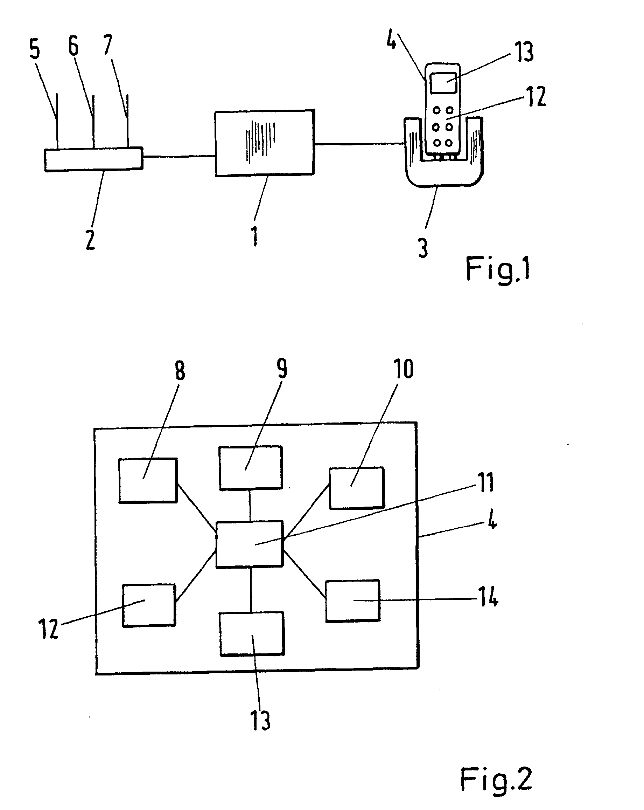

Das erfindungsgemäße Abbuchungsgerät besteht gemäß Fig. 1 aus vier Gerätemodulen, die nachfolgend noch näher beschrieben werden. Drei dieser Module, nämlich die Fahrzeugbox 1, das Außenkommunikationsmodul 2 und das Halterungsmodul 3 sind fest in das Fahrzeug eingebaut, während das vierte Modul ein mobiles elektronisches Mautgerät 4 ist, das in das Halterungsmodul 3 einsetzbar und leicht aus diesem wieder herausnehmbar ist. Die Fahrzeugbox 1 beinhaltet, was in Fig. 1 nicht näher dargestellt ist, eine Stromversorgung, ein manipulationsgeschütztes Speichermodul für fahrzeugspezifische Informationen und eine Schnittstelle für die Innenkommunikation mit dem mobilen Mautgerät 4. Die im Speichermodul hinterlegten fahrzeugspezifischen Informationen beziehen sich beispielsweise auf den Fahrzeugtyp, die Fahrzeugklasse, die Fahrwerksnummer oder auch auf den Namen der Firma, zu der das Fahrzeug gehört. In jedem Fall ist in dem Speichermodul ein fahrzeugspezifisches Gerätezertifikat hinterlegt. Vorzugsweise sind alle gespeicherten Informationen in verschlüsselter Form abgelegt und können nur von einer autorisierten Instanz (z.B. Technischer Überwachungsverein) geändert werden. Auf diese Weise wird unzulässigen Manipulationen wirksam vorgebeugt. Aus den fahrzeugspezifischen Informationen ergeben sich beispielsweise Parameter für die Heranziehung des richtigen Tarifs bei der Nutzungsgebührenabrechnung. Vorzugsweise weist die Fahrzeugbox 1 auch eine Schnittstelle zum Abgreifen aktueller Betriebsdaten des Fahrzeugs z.B. von einem elektronischen Informationsbus im Fahrzeug (z.B. CAN-Bus) oder von Sensoren oder Meßgeräten des Fahrzeugs auf. Auf diese Weise ergibt sich beispielsweise die Möglichkeit zu einer emissionsabhängigen Erhebung von Nutzungsgebühren, indem über die Lambda-Sonde des Verbrennungsmotors Emissionswerte ermittelt werden. Die Erfassung aktueller Betriebsdaten kann auch im Hinblick auf die Überbrückung von Störungen beim Empfang der GPS-Satelliten-Signale, die zur Bestimmung der vom Fahrzeug benutzten gebührenpflichtigen Wegstrecken benötigt werden, sehr hilfreich sein. So können aus Geschwindigkeitsund Zeitangaben bzw. aus gemessenen zurückgelegten Entfernungen Stützwerte für die Fahrstreckenanalyse im Sinne eines "dead-reckoning" gewonnen werden. Soweit. keine unmittelbare signaltechnische Verbindung zwischen dem Außenkommunikationsmodul 2 und dem Halterungsmodul 3 vorgesehen ist, ist eine Schnittstelle zwischen Fahrzeugbox 1 und Außenkommunikationsmodul 2 zur Durchleitung des Signalflusses vorhanden.

Das Außenkommunikationsmodul 2, das signaltechnisch mit der Fahrzeugbox 1 verbunden ist, umfaßt eine Antenne 5 für den Empfang von GPS-Satelliten-Signalen (oder ähnlichen drahtlos empfangbaren Signalen zur Navigation) sowie eine Antenne 6 für die DSRC-Kommunikation und/oder eine Antenne 7 für die GSM-Kommunikation (oder eine ähnliche Mobilfunktechnik). Die DSRC-Antenne 6 ermöglicht eine Kurzstreckenkommunikation beispielsweise im HF- oder im Infrarot-Bereich. Zweckmäßigerweise werden die Antennen einzeln oder kombiniert außerhalb der Fahrgastzelle des Fahrzeugs angeordnet, da die mit zunehmender Häufigkeit eingesetzten metallisierten Windschutzscheiben eine erhöhte Absorption von HF-Signalen bewirken. Die Antennen 5, 6, 7 und die Fahrzeugbox 1 sind über abgeschirmte Signalleitungen (z.B. elektrische oder Glasfaserleitung) miteinander verbunden. Die DSRC-Antenne 6 ist vorzugsweise als Phased-Array-Antenne ausgeführt und aufbautechnisch mit der GPS-Antenne 5 und/oder der GSM-Antenne 7 kombiniert. Eine vorteilhafte Position für eine kombinierte oder integrierte Antenne ist auf dem Fahrzeugdach kurz hinter der Windschutzscheibe zu sehen.

Die Antennen 5, 6, 7 des GPS-Empfängers, der DSRC-Einrichtung und des GSM-Mobilfunkgerätes befinden sich aufgrund des signaldämpfenden Einflusses der Windschutzscheibe und der Abschirmung durch das Fahrzeugdach zweckmäßigerweise an der Außenseite des Fahrzeugs. Das nachträgliche Legen von Antennenkabeln vom Fahrzeuginneren nach außen ist aber aufwendig und teuer, so daß bei einer Nachrüstung des Abbuchungsgerätes entsprechend hoher Montageaufwand anfallen würde. Um diesen Aufwand drastisch zu reduzieren, empfiehlt es sich, die Antennen 5, 6, 7 bzw. die integrierte Antenne (GSM/GPS/DSRC) als passives Element von außen auf die Scheibe zu kleben. Die Stromversorgung und die signaltechnische Anbindung erfolgt induktiv oder kapazitiv durch eine entsprechende, fahrzeuginnenseitig geklebte Kommunikationsvorrichtung, von der aus die Kabel (Stromversorgung und Signalleitung) an die Fahrzeugbox 1 weitergeleitet werden. Dadurch werden Durchbrüche durch die Fahrzeugaußenhaut überflüssig. Eine Trennung der Funktionen Stromversorgung und Signalübertragung, die z.B. mit jeweils einer Induktionsschleife auf der Innen- und auf der Außenseite der Windschutz- oder Heckscheibe erreicht werden kann, würde nicht nur Montagekostenvorteile mit sich bringen, sondern auch hinsichtlich der Abhörsicherheit vorteilhaft sein. Alternativ kann die Signalübertragung statt elektrisch auch optisch erfolgen, z.B. mittels Laser und Photodioden. Eine Matrix aus Laser- und Photodioden könnte in dem Fall die Datenübertragungsrate und die Abhörsicherheit erhöhen. Für die optische Datenübertragung durch die Windschutzscheibe ist die signaltechnische Wandlung von "elektrisch" auf "optisch" notwendig und würde im Antennengehäuse erfolgen.

Das Halterungsmodul 3 ist signaltechnisch mit der Fahrzeugbox 1 und dem Außenkommunikationsmodul 2 verbunden. Es weist Einrichtungen zur mechanischen Aufnahme des mobilen Mautgeräts 4, zur signaltechnischen Verbindung des mobilen Mautgeräts 4 mit dem Außenkommunikationsmodul 2 und der Fahrzeugbox 1 sowie zur Stromversorgung des mobilen Mautgeräts 4 auf. Das Halterungsmodul 3 gleicht im Prinzip einer Fahrzeughalterung für ein Mobüfunktelefon. Es ermöglicht es, das mobile Mautgerät 4 in einfacher Weise bei Bedarf aus dem Fahrzeug herauszunehmen oder es funktionstechnisch mit dem Fahrzeug zu verbinden.

Das mobile Mautgerät 4 beinhaltet den eigentlichen Kern des erfindungsgemäßen Abbuchungsgerätes. Es ist in Fig. 2 in Form eines prinzipiellen Funktionsschemas in detaillierterer Form dargestellt. Das mobile Mautgerät 4 weist einen GPS-Empfänger 12 zur Ermittlung der aktuellen geografischen Position des Fahrzeugs sowie mehrere Datenspeicher auf, von denen ein Speicher 8 für Tarifdaten und geografische Daten des gebührenpflichtigen Wegstreckennetzes, ein Speicher 9 für ein Gerätezertifikat des mobilen Mautgeräts 4 und ein von außen mit einem Wertguthaben aufladbarer Speicher 10 für die elektronische Abwicklung des Zahlungsverkehrs zwischen dem Benutzer des Abbuchungsgeräts und dem Empfänger der Nutzungsgebühren vorgesehen ist. Weiterhin umfaßt das mobile Mautgerät 4 einen Prozessor 11 zur Berechnung der Nutzungsgebühren sowie zur gegenseitigen Authentisierung des mobilen Mautgeräts 4 und der Fahrzeugbox 1, ferner ein Tastaturfeld 12 zur Gerätebedienung sowie eine Anzeigeeinrichtung für den Gerätestatus und für Buchungsinformationen. Die mit dem GPS-Empfänger 12 ermittelten Daten zur jeweiligen aktuellen geografischen Position des Fahrzeugs ermöglichen es dem Prozessor 11, die vom Fahrzeug befahrene Strecke daraufhin zu untersuchen, ob und in welchem Umfang gebührenpflichtige Wegstrecken genutzt wurden, so daß eine nutzungsgerechte Abrechnung erfolgen kann. Hierzu werden die im Speicher 8 hinterlegten Tarifdaten und die geografischen Daten des Wegstreckennetzes benötigt. Zweckmäßigerweise wird der Speicher 8 in einen reinen Lesespeicher (ROM) und in einen Schreib/Lese-Speicher (RAM) aufgeteilt. In dem ROM-Speicher werden die ursprünglichen Daten dauerhaft abgelegt, die zu einem bestimmten Zeitpunkt gültig waren. Der RAM-Speicher ist zur Aufnahme von Aktualisierungsdaten bestimmt. Aus Sicherheitsgründen werden die Aktualisierungsdaten zweckmäßigerweise in einer Form abgelegt, bei der sich die jeweils aktuellen Tarifdaten aus diesen Aktualisierungsdaten nur unter Mitberücksichtigung der im ROM-Speicher ursprünglich hinterlegten Tarifdaten ermittelbar sind. Beispielsweise können die Änderungsdaten in Form von prozentualen Änderungszuschlägen gespeichert sein. Auf diese Weise wird eine zusätzliche Hürde gegen unerlaubte Manipulationen errichtet. Der Speicher 9 mit dem Gerätezertifikat für das mobile Mautgerät 4 gewährleistet eine Möglichkeit zur gegenseitigen Authentisierung des Mautgeräts 4 und der Fahrzeugbox 1, verhindert also eine Inbetriebnahme eines mobilen Mautgeräts 4, das nicht zur Fahrzeugbox 1 paßt. Der Speicher 9 ist vorzugsweise als Chip-Karte, insbesondere als fest in das mobile Mautgerät 4 integrierte Chip-Karte ausgebildet. Letzteres stellt eine besonders wirksame Sperre gegen unerlaubte Manipulationen dar. Eine entsprechende Speicherausbildung ist auch für den Speicher 10 vorgesehen, der der elektronischen Abwicklung des Zahlungsverkehrs zwischen dem Benutzer des Abbuchungsgeräts und dem Empfänger der Nutzungsgebühren dient. Dieser Speicher 10 beinhaltet das Wertguthaben, von dem die jeweils fälligen Beträge für die gebührenpflichtigen Wegstrecken abgebucht werden. Vorzugsweise ist dieser Speicher 10 als Funk-Chip-Karte (contactless card) ausgebildet und in versiegelter Form in das mobile Mautgerät integriert. Da ein solcher Speicher 10 keine nach außen zugänglichen Kontakte aufweist, sind Manipulationen, wie sie bekanntermaßen bei Telefonkarten mittels PC und geeigneten Karten-Lese/Schreibgeräten vielfach schon vorgenommen wurden, weitestgehend ausgeschlossen. Es empfiehlt sich, die Speicher 8, 9, 10 des mobilen Mautgeräts 4 in einem gemeinsamen Speichermodul körperlich zusammenzufassen. Der Prozessor 11 führt sämtliche Prüfvorgänge zur gegenseitigen Authentisierung des mobilen Mautgeräts 4 und der Fahrzeugbox 1 aus und erledigt die zur ordnungsgemäßen Ermittlung der jeweiligen Nutzungsgebühren erforderlichen Rechenvorgänge. Das bedeutet, daß er nicht nur die vom Fahrzeug gerade befahrene Strecke identifiziert, sondern dazu auch den jeweils gültigen Tarif für die Gebührenbestimmung ermittelt. Das Tastaturfeld 12 dient insbesondere zum Ein- und Ausschalten des Abbuchungsgeräts sowie zum Abfragen des jeweils im Speicher 10 noch vorhandenen Wertguthabens. Über die Tastatur 12 kann beispielsweise auch eine Einstellung der jeweiligen Tarifklasse erfolgen. Ähnlich wie bei einem Mobilfunktelefon können der Gerätestatus, der Stand des Wertguthabens und sonstige Buchungsinformationen auf einer Anzeigeeinrichtung 13 sichtbar gemacht werden. Zweckmäßigerweise ist diese Anzeigeeinrichtung 13 als Flüssigkristallanzeige ausgebildet.

Zur Erhöhung des Manipulationsschutzes empfiehlt es sich, die Funktionen des GPS-Empfängers 14, der DSRC- und/oder GSM-Kommunikation, der Speichercontroller für die Speicher 8, 9, 10 sowie des Prozessors 11 in einer hochintegrierten elektronischen ASIC-Schaltung (application specific integrated circuit) körperlich zusammenzufassen, wobei die interne Kommunikation Bus-gestützt erfolgt. Besonders zweckmäßig ist es, wenn die Kommunikation von außen mit dieser hochintegrierten Schaltung speicheradressiert (memory mapped) und/oder über eine parallele Schnittstelle erfolgt. Im Fall der hochintegrierten Lösung besitzt das mobile Mautgerät 4 einen sogenannten "hardened kernel". Auf diese Weise wird die Geräteintegrität in einem Höchstmaß gesichert. Zur stichprobenartigen oder auch vollständigen Überwachung der korrekten Nutzungsgebührenabrechnung empfiehlt es sich, den Prozessor 11 so zu programmieren, daß über das Außenkommunikationsmodul 2 von außen Informationen über die Ordnungsgemäßheit des Betriebs des jeweiligen Abbuchungsgeräts auf drahtlosem Wege abfragbar sind, um beispielsweise Manipulationen in der Tarifstruktur oder die Auswahl eines unzutreffenden Tarifs seitens des Benutzers erkennen zu können.

Durch die Verwendung hochintegrierter elektronischer Bauteile ist es möglich, das Bauvolumen des Abbuchungsgeräts insgesamt relativ klein zu halten. Es ist daher möglich, das Abbuchungsgerät beispielsweise als Teil eines elektronischen Fahrtschreibers zu gestalten. Insbesondere ist es möglich, etwa Baugruppen eines Mobilfunktelefons oder eines verkehrstelematischen Endgerätes (z.B. Spannungsversorgung, Antennen) in das Abbuchungsgerät mit einzubeziehen, also diese Baugruppen für mehrere Anwendungszwecke gemeinsam zu nutzen oder aber Module des Abbuchungsgeräts gemeinsam mit Baugruppen etwa eines Mobiltelefons oder eines verkehrstelematischen Endgerätes in das Fahrzeug einzubauen.

Besonders vorteilhaft ist es, wenn die Elektronik des Abbuchungsgeräts anwendungsoffen konzipiert ist, so daß von außen zusätzliche Softwareapplikationen modulweise nachladbar sind. Solche Applikationen beziehen sich vorzugsweise auf das Gebiet der Verkehrstelematik.

Die Funktion des erfindungsgemäßen Abbuchungsgeräts läßt sich wie folgt beschreiben:
Ein Nutzer geht mit seinem mobilen Mautgerät 4 zu einem externen, vom Betreiber des gebührenpflichtigen Verkehrsnetzes aufgestellten POS-Terminal (point of sale), um mittels Bargeld oder Kreditkarte ein Wertguthaben für die Nutzung des gebührenpflichtigen Wegstreckennetzes einzukaufen. Der für die Ladung des Wertguthabens erforderliche Datenverkehr könnte im Fall einer HF-Kommunikation direkt zwischen dem POS-Terminal und einer im mobilen Mautgerät 4 befindlichen Funk-Chip-Karte stattfinden. Diese Kommunikation läuft zweckmäßigerweise nach den standardisierten und zertifizierten Verfahren des elektronischen Zahlungsverkehrs ab. Selbstverständlich könnte der Datenaustausch auch über eine Infrarot-Schnittstelle erfolgen. Für die interne Durchführung von Abbuchungen von dem Wertguthaben ist eine übliche elektrische Schnittstelle zur Funk-Chip-Karte vorhanden.

Das Wertguthaben kann aber auch in an sich herkömmlicher Weise am POS-Terminal über eine elektrische Schnittstelle des mobilen Mautgeräts 4 in den Speicher 10 geladen werden. Dabei kann durch das Gerätezertifikat im Speicher 9 eine äußerst hohe Sicherheit gegen unerlaubte Manipulationen gewährleistet werden, da vor einem Transfer des Wertguthabens eine Authentisierung zwischen Mautgerät 4 und POS-Terminal stattfindet. Wurde im Falle eines Manipulationsversuchs anstelle eines POS-Terminals ein PC mit dem mobilen Mautgerät 4 verbunden, könnte dies vom Mautgerät 4 erkannt und bei entsprechender Programmierung des Geräts sofort eine dauerhafte Gerätesperre ausgelöst werden, die nur von einer autorisierten Instanz wieder aufgehoben werden kann.

Grundsätzlich wäre es auch möglich, das Wertguthaben wie bei einer Telefonübertragung vom POS-Terminal direkt an das mobile Mautgerät 4, das eine entsprechende Adressierung aufweisen muß, zu übersenden. In diesem Fall wäre eine räumliche Nähe zwischen dem mobilen Mautgerät und dem POS-Terminal gar nicht erforderlich. Die für den Ladevorgang erforderliche elektrische Energie kann beispielsweise wie bei einem Mobilfunktelefon über eine aufladbare elektrische Batterie, die im Fahrzeug nachladbar ist, bereitgestellt werden.

Nach dem Aufladen des Speichers 10 mit dem Wertguthaben kann das mobile Mautgerät 4 in das Halterungsmodul 3 des Fahrzeugs eingesetzt werden. Sobald das Gerät in der vorgesehenen Halterung steckt, beginnt der Authentisierungsvorgang zwischen der Fahrzeugbox 1 und dem mobilen Mautgerät 4, der über den Prozessor 11 durchgeführt wird. Erst bei erfolgreicher Authentisierung ist das Abbuchungsgerät betriebsbereit. Im Rahmen der Authentisierung ist es keineswegs zwingend, daß zu einer bestimmten Fahrzeugbox 1 nur ein einziges mobiles Mautgerät 4 als passend akzeptiert wird. Gerade bei größeren Fuhrbetrieben kann es sehr vorteilhaft sein, wenn alle Mautgeräte dieses Betriebes bei allen Fahrzeugboxen desselben Betriebes akzeptiert werden. Es müssen dann lediglich nur so viele mobile Mautgeräte 4 zur Verfügung stehen, wie Fahrzeuge dieses Unternehmens auf gebührenpflichtigen Strecken unterwegs sind. Durch die Authentisierung wird eine mißbräuchliche Nutzung außerhalb des Fuhrparks dieses Unternehmens ausgeschlossen. Da im Zuge der Authentisierung vom Prozessor 11 auch die fahrzeugspezifischen Daten aus der Fahrzeugbox 1 abgefragt werden können, kann der Prozessor 11 von sich aus das mobile Mautgerät 4 auf die jeweilige Fahrzeugklasse konfigurieren, so daß die richtige Tarifklasse für die Gebührenabrechnung herangezogen wird. Fährt das mit einem ordnungsgemäß in Betrieb gesetzten Abbuchungsgerät ausgestattete Fahrzeug in eine gebührenpflichtige Wegstrecke ein, so wird dies automatisch vom Prozessor 11 festgestellt. Entsprechend dem Tarif und der zurückgelegten Wegstrecke werden dann während der Fahrt laufend die fälligen Gebühren von dem Wertguthaben im Speicher 10 abgebucht. Zweckmäßigerweise wird dies durch die Anzeigeeinrichtung 13 sichtbar gemacht. Sobald das Fahrzeug das gebührenpflichtige Streckennetz wieder verläßt, werden die Abbuchungsvorgänge beendet.

Grundsätzlich ist es möglich, mit ein und demselben erfindungsgemäßen Abbuchungsgerät Nutzungsabrechnungen für unterschiedliche Betreiber durchzuführen, deren gebührenpflichtige Wegstreckennetze vom jeweiligen Fahrzeug nacheinander durchfahren werden. In diesem Fall kann der Speicher 10 für die Abwicklung des Zahlungsverkehrs so gestaltet sein, daß er mit mehreren Konten eingerichtet wird, wobei jeweils ein Konto einem bestimmten Betreiber zugeordnet wird. Die von dem Wertguthaben abgebuchten Beträge werden dann entsprechend der tatsächlichen Nutzung des jeweiligen Streckennetzes den Konten der einzelnen Betreiber gutgeschrieben. Die Information darüber, welche Beträge auf welchen Betreiber entfallen, kann auf verschiedene Art und Weise zur Steuerung des tatsächlichen Geldflusses nach außen an eine Abrechnungsstelle gegeben werden. So ist es beispielsweise möglich, daß - wenn auch mit Verspätung - beim nächsten Nachladen des Wertguthabens an einem POS-Terminal die verschiedenen Konten entsprechend der Verwendung des vorherigen Wertguthabens aus dem Speicher 10 ausgelesen werden. Es ist aber auch ohne weiteres möglich, diese Informationen z.B. über eine GSM-Kommunikation laufend aus dem Fahrzeug heraus an eine entsprechende externe Abrechnungsstelle zu senden.

Das erfindungsgemäße Abbuchungsgerät eignet sich sowohl für den Einsatz in Nutzkraftwagen als auch in Personenkraftwagen. Es bietet im Interesse der Betreiber von gebührenpflichtigen Wegstreckennetzen einen hohen Schutz gegen jegliche unbefugten Manipulationen und bietet gleichzeitig auch dem Nutzer einen starken Schutz gegen unbefugte Nutzung eines eingekauften Wertguthabens, da sichergestellt ist, daß das mobile Mautgerät, mit dem das Wertguthaben praktisch untrennbar verbunden ist, nur auf "berechtigten" Fahrzeugen benutzt werden kann.

## Patentansprüche

1. Abbuchungsgerät, das in einem Fahrzeug angeordnet ist, zur Abbuchung von Nutzungsgebühren, die für die Nutzung von gebührenpflichtigen Wegstrecken eines Wegstreckennetzes zu entrichten sind, bestehend aus den fest in das Fahrzeug eingebauten Gerätemodulen
- Fahrzeugbox (1)
- Außenkommunikationsmodut (2) und
- Halterungsmodul (3)
- sowie aus einem mobilen elektronischen Mautgerät (4), das in das Halterungsmodul (3) einsetzbar und leicht wieder aus diesem herausnehmbar ist,
wobei die Fahrzeugbox (1)
- eine Stromversorgung,
- ein manipulationsgeschütztes Speichermodul für fahrzeugspezifische Informationen einschließlich eines fahrzeugspezifischen Gerätezertifikats und
- eine Schnittstelle für die Innenkommunikation mit dem mobilen Mautgerät aufweist,
wobei das Außenkommunikationsmodul (2)
- eine Antenne (5) für den Empfang von GPS-Satelliten-Signalen und
- eine Antenne (6, 7) für die DSRC- und/oder GSM-Kommunikation aufweist,
wobei ferner das Halterungsmodul (3) signaltechnisch mit der Fahrzeugbox (1) und dem Außenkommunikationsmodul (2) verbunden ist und Einrichtungen aufweist
- zur mechanischen Aufnahme des mobilen Mautgeräts (4),
- zur signaltechnischen Verbindung des mobilen Mautgeräts (4) mit dem Außenkommunikationsmodul (2) und der Fahrzeugbox (1) sowie
- zur Stromversorgung des mobilen Mautgeräts (4)
und wobei das mobile Mautgerät (4) ausgestattet ist
- mit einem GPS-Empfänger (12) zur Ermittlung der aktuellen geografischen Position des Fahrzeugs,
- mit einem Speicher (8) für Tarifdaten und geografische Daten des gebührenpflichtigen Wegstreckennetzes,
- mit einem Speicher (9) für ein Gerätezertifikat des mobilen Mautgeräts (4),
- mit einem von außen mit einem Wertguthaben aufladbaren Speicher (10) für die elektronische Abwicklung des Zahlungsverkehrs zwischen dem Benutzer des Abbuchungsgeräts und dem Empfänger der Nutzungsgebühren,
- mit einem Prozessor (11) zur Berechnung der Nutzungsgebühren sowie zur gegenseitigen Authentisierung des mobilen Mautgeräts (4) und der Fahrzeugbox (1),
- mit einem Tastaturfeld (12) zur Gerätebedienung sowie
- mit einer Anzeigeeinrichtung (13) für den Gerätestatus und Buchungsinformationen.

2. Abbuchungsgerät nach Anspruch 1,
**dadurch gekennzeichnet,**
**daß** die Informationen in dem Speichermodul der Fahrzeugbox (1) verschlüsselt abgespeichert sind.

3. Abbuchungsgerät nach einem der Ansprüche 1 bis 2,
**dadurch gekennzeichnet,**
**daß** die Fahrzeugbox (1) eine Schnittstelle zum Abgreifen aktueller Betriebsdaten des Fahrzeugs von einem Informationsbus oder von Sensoren oder Meßgeräten des Fahrzeugs aufweist.

4. Abbuchungsgerät nach einem der Ansprüche 1 bis 3,
**dadurch gekennzeichnet,**
**daß** der Speicher (8) für Tarifdaten und geografische Daten aufgeteilt ist in einen als reinen Lesespeicher (ROM) ausgebildeten Speicher und in einen Schreib/Lese-Speicher (RAM) zur Aufnahme von Aktualisierungsdaten, wobei die aktuellen Tarifdaten nur unter Mitberücksichtigung der Tarifdaten des reinen Lesespeichers ermittelbar sind.

5. Abbuchungsgerät nach einem der Ansprüche 1 bis 4,
**dadurch gekennzeichnet,**
**daß** der Speicher (9) für das Gerätezertifikat und/oder der Speicher (10) für den Zahlungsverkehr als Chipkarte, insbesondere als fest in das mobile Mautgeräts (4) integrierte Chipkarte ausgebildet ist.

6. Abbuchungsgerät nach einem der Ansprüche 1 bis 5,
**dadurch gekennzeichnet,**
**daß** die einzelnen Speicher (8, 9, 10) des mobilen Mautgeräts (4) in einem gemeinsamen Speichermodul zusammengefaßt sind.

7. Abbuchungsgerät nach einem der Ansprüche 1 bis 6,
**dadurch gekennzeichnet,**
**daß** der Speicher (10) für den Zahlungsverkehr als Funk-Chipkarte z.B. contactless card, ausgebildet ist.

8. Abbuchungsgerät nach einem der Ansprüche 1 bis 7,
**dadurch gekennzeichnet,**
**daß** die Funktionen des GPS-Empfängers (14), der DSRC- und/oder GSM-Kommunikation, der Speichercontroller und des Prozessors (11) in einer hochintegrierten elektronischen Schaltung z.B. ASIC, körperlich zusammengefaßt sind.

9. Abbuchungsgerät nach Anspruch 8,
**dadurch gekennzeichnet,**
**daß** zur Kommunikation mit der hochintegrierten Schaltung ausschließlich parallele Schnittstellen vorgesehen sind.

10. Abbuchungsgerät nach Anspruch 8 oder 9,
**dadurch gekennzeichnet,**
**daß** für den Betrieb des mobilen Mautgeräts (4) ein sogenannter "hardened kernel" vorgesehen ist.

11. Abbuchungsgerät nach einem der Ansprüche 1 oder 10,
**dadurch gekennzeichnet,**
**daß** das Abbuchungsgerät Teil eines elektronischen Fahrtschreibers ist.

12. Abbuchungsgerät nach einem der Ansprüche 1 oder 11,
**dadurch gekennzeichnet,**
**daß** das Abbuchungsgerät Baugruppen eines Mobilfunktelefons oder eines verkehrstelematischen Endgeräts umfaßt oder gemeinsam mit Baugruppen eines Mobilfunktelefons oder verkehrstelematischen Endgeräts in das Fahrzeug eingebaut ist.

13. Abbuchungsgerät nach einem der Ansprüche 1 oder 12,
**dadurch gekennzeichnet,**
**daß** die Elektronik des Abbuchungsgeräts in der Weise anwendungsoffen konzipiert ist, daß von außen zusätzliche Softwareapplikationen der Verkehrstelematik modulweise nachladbar sind.

14. Abbuchungsgerät nach einem der Ansprüche 1 oder 13,
**dadurch gekennzeichnet,**
**daß** über das Außenkommunikationsmodul (2) von außen Informationen über die Ordnungsgemäßheit des Betriebs des Abbuchungsgeräts abfragbar sind.

## Claims

1. Debiting device, positioned inside a vehicle, for deducting toll charges payable when using roads within a road network that are subject to toll charges, consisting of the following device modules which are permanently installed inside the vehicle
- vehicle box (1),
- outside communications module (2) and
- mounting module (3),
- and of a mobile electronic toll device (4) which can be placed into the mounting module (3) and easily removed from it again,
the vehicle box (1) having
- a power supply,
- a memory module, protected against counterfeiting, for vehicle-specific information, including a vehicle-specific device certificate and
- an interface for internal communication with the mobile toll device,
the outside communications module (2) having
- an antenna (5) for receiving GPS satellite signals, and
- an antenna (6, 7) for DSRC and/or GSM communication,
and, in addition, the mounting module (3) being connected, by signalling technology, to the vehicle box (1) and the outside communications module (2), and having equipment
- to mechanically receive the mobile toll device (4),
- to connect the mobile toll device (4) to the outside communications module (2) and the vehicle box (1) by signalling technology, and
- to supply power to the mobile toll device (4)
and the mobile toll device (4) being fitted with
- a GPS receiver (12) to establish the current geographical location of the vehicle,
- a memory (8) for tariff data and geographical data of the road network which is subject to toll charges,
- a memory (9) for a vehicle certificate of the mobile toll device (4),
- a memory (10) which can be charged up from outside with a money credit sum for carrying out payment transactions electronically between the user of the debiting device and the recipient of the toll charges,
- a processor (11) for calculating the tolls and for the mutual authentication of the mobile toll device (4) and the vehicle box (1),
- a keypad (12) for operating the device, and
- a display device (13) to show the device status and information on transactions.

2. Debiting device as in Claim 1,
**characterised in that**
the information is stored in the memory module of the vehicle box (1) in encrypted form.

3. Debiting device as in one of Claims 1 to 2,
**characterised in that**
the vehicle box (1) has an interface for tapping current operating data of the vehicle from an information bus or from sensors or measuring instruments in the vehicle.

4. Debiting device as in one of Claims 1 to 3,
**characterised in that**
the memory (8) for tariff data and geographical data is divided into a memory in the form of a read-only memory (ROM), and a read-write memory (RAM) for picking up data updates, whereby the current tariff data can be established only when the tariff data of the read-only memory are also taken into account.

5. Debiting device as in one of Claims 1 to 4,
**characterised in that**
the memory (9) for the device certificate and/or the memory (10) for the payment transactions is in the form of a chip card, in particular a chip card which is permanently integrated into the mobile toll device (4).

6. Debiting device as in one of Claims 1 to 5,
**characterised in that**
the individual memories (8, 9, 10) of the mobile toll device (4) are combined into a common memory module.

7. Debiting device as in one of Claims 1 to 6,
**characterised in that**
the memory (10) for the payment transactions is in the form of a wireless chip card such as a contactless card.

8. Debiting device as in one of Claims 1 to 7,
**characterised in that**
the functions of the GPS receiver (14), of DSRC and/or GSM communication, of the memory controller and of the processor (11) are physically combined into a large-scale integrated electronic circuit such as ASIC.

9. Debiting device as in Claim 8,
**characterised in that**
exclusively parallel interfaces are provided for communication with the large-scale integrated circuit.

10. Debiting device as in Claim 8 or 9,
**characterised in that**
that a "hardened kernel" is provided for the operation of the mobile toll device (4).

11. Debiting device as in one of Claims 1 or 10,
**characterised in that**
the debiting device forms part of an electronic tachograph.

12. Debiting device as in one of Claims 1 or 11,
**characterised in that**
the debiting device incorporates component units of a mobile telephone or of a transport telematic terminal device, or is installed into the vehicle together with component units of a mobile telephone or of a transport telematic terminal device.

13. Debiting device as in one of Claims 1 or 12,
**characterised in that**
the electronics of the debiting device are designed in an application-independent manner in such a way that additional transport telematic software applications can be loaded later from outside in modular form.

14. Debiting device as in one of Claims 1 or 13,
**characterised in that**
information on the correctness of the operation of the debiting device can be requested from outside via the outside communications module (2).

## Revendications

1. Appareil, qui est agencé dans un véhicule, pour débiter des taxes d'utilisation, qui doivent être payées pour l'utilisation d'étendues soumises à péage d'un réseau routier, constitué des modules d'appareil montés de façon fixe dans le véhicule
- boîtier de véhicule (1)
- module de communication externe (2), et
- module de maintien (3)
- ainsi que d'un appareil de péage électronique mobile (4) qui est utilisable dans le module de maintien (3) et peut être facilement retiré de celui-ci,
le boîtier de véhicule (1) présentant
- une alimentation en courant,
- un module de mémoire protégé contre une manipulation pour des informations spécifiques au véhicule y compris un certificat d'appareil spécifique au véhicule, et
- une interface pour la communication interne avec l'appareil de péage mobile,
le module de communication externe (2) présentant
- une antenne (5) pour la réception de signaux satellites GPS, et
- une antenne (6, 7) pour la communication DSRC et/ou GSM, le module de maintien (3) étant de plus relié par une technique de signalisation au boîtier de véhicule (1) et au module de communication externe (2) et présentant des dispositifs
- pour la réception mécanique de l'appareil de péage mobile (4),
- pour la liaison par une technique de signalisation de l'appareil de péage mobile (4) avec le module de communication externe (2) et le boîtier de véhicule (1), ainsi que
- pour l'alimentation en courant de l'appareil de péage mobile (4), et
l'appareil de péage mobile (4) étant muni de
- un récepteur GPS (12) pour déterminer la position géographique actuelle du véhicule,
- une mémoire (8) pour des données de tarif et des données géographiques du réseau routier à péage,
- une mémoire (9) pour un certificat d'appareil de l'appareil de péage mobile (4),
- une mémoire (10) pouvant être chargée de l'extérieur d'un crédit de valeur pour le déroulement électronique du trafic des paiements entre l'utilisateur de l'appareil de débit et le récepteur des taxes d'utilisation,
- un processeur (11) pour calculer les taxes d'utilisation ainsi que pour l'authentification mutuelle de l'appareil de péage mobile (4) et du boîtier de véhicule (1),
- un champ de clavier (12) pour la commande de l'appareil, ainsi que
- un dispositif d'affichage (13) pour l'état de l'appareil et des informations de comptabilisation.

2. Appareil de débit selon la revendication 1,
**caractérisé en ce que** les informations dans le module de mémoire du boîtier de véhicule (1) sont mémorisées de façon codée.

3. Appareil de débit selon une des revendications 1 à 2,
**caractérisé en ce que** le boîtier de véhicule (1) présente une interface pour recevoir des données de fonctionnement actuelles du véhicule d'un bus d'information ou de capteurs ou d'appareils de mesure du véhicule.

4. Appareil de débit selon une des revendications 1 à 3,
**caractérisé en ce que** la mémoire (8) pour des données de tarif et des données géographiques est subdivisée en une mémoire réalisée comme une mémoire à lecture pure (ROM) et une mémoire à lecture/écriture (RAM) pour recevoir des données d'actualisation, les données de tarif actuelles ne pouvant être déterminées qu'en tenant compte des données de tarif de la mémoire à lecture pure.

5. Appareil de débit selon une des revendications 1 à 4,
**caractérisé en ce que** la mémoire (9) pour le certificat d'appareil et/ou la mémoire (10) pour le trafic des paiements est réalisée comme carte à puce, en particulier comme carte à puce intégrée de façon fixe dans l'appareil de péage mobile (4).

6. Appareil de débit selon une des revendications 1 à 5,
**caractérisé en ce que** les mémoires individuelles (8, 9, 10) de l'appareil de péage mobile (4) sont rassemblées dans un module de mémoire commun.

7. Appareil de débit selon une des revendications 1 à 6,
**caractérisé en ce que** la mémoire (10) pour le trafic des paiements est réalisée comme carte à puce radio, par exemple "contactless card".

8. Appareil de débit selon une des revendications 1 à 7,
**caractérisé en ce que** les fonctions du récepteur GPS (14), de la communication DSRC et/ou GSM, du contrôleur de mémoire, et du processeur (11) sont spatialement rassemblées dans un circuit électronique intégré, par exemple ASIC.

9. Appareil de débit selon la revendication 8,
**caractérisé en ce que**, pour la communication avec le circuit intégré, exclusivement des interfaces parallèles sont prévues.

10. Appareil de débit selon la revendication 8 ou 9,
**caractérisé en ce que**, pour le fonctionnement de l'appareil de péage mobile (4), il est prévu un "hardened kernel".

11. Appareil de débit selon une des revendications 1 ou 10,
**caractérisé en ce que** l'appareil de débit fait partie d'un tachygraphe électronique.

12. Appareil de débit selon une des revendications 1 ou 11,
**caractérisé en ce que** l'appareil de débit comporte des sous-ensembles d'un radiotéléphone mobile ou d'un terminal télématique de trafic ou est intégré dans le véhicule en commun avec des sous-ensembles d'un radiotéléphone mobile ou d'un terminal télématique de trafic.

13. Appareil de débit selon une des revendications 1 ou 12,
**caractérisé en ce que** l'électronique de l'appareil de débit est conçu en étant ouverte à des applications de façon que des applications logicielles supplémentaires de la télématique du trafic peuvent être chargées ultérieurement de façon modulaire de l'extérieur.

14. Appareil de débit selon une des revendications 1 ou 13,
**caractérisé en ce que**, par l'intermédiaire du module de communication externe (2), des informations peuvent être appelées de l'extérieur concernant le caractère correct du fonctionnement de l'appareil de débit.
